# EUROPÄISCHE PATENTSCHRIFT

(11) **EP 1 226 442 B1**
(45) Veröffentlichungstag und Bekanntmachung des Hinweises auf die Patenterteilung: **25.05.2005**
(21) Anmeldenummer: 00965968.1
(22) Anmeldetag: 11.09.2000
(51) Int. Cl.: G01N 35/02

(54) **VORRICHTUNG UND VERFAHREN ZUR PLANARISIERUNG VON TITERPLATTEN IN SCREENING -UND/ODER SYNTHESESYSTEMEN**
DEVICE AND METHOD FOR LEVELING OUT TITER PLATES USED IN SCREENING AND/OR SYNTHESIS SYSTEMS
DISPOSITIF ET PROCEDE D'APLANISSEMENT DE PLAQUES TITREES DANS DES SYSTEMES DE CRIBLAGE ET/OU DE SYNTHESE

(30) Priorität: 11.09.1999 DE 19943443
(43) Veröffentlichungstag der Anmeldung: 31.07.2002
(73) Patentinhaber: INSTITUT FÜR MIKROTECHNIK MAINZ GmbH, 55129 Mainz-Hechtsheim (DE)
(72) Erfinder: WEBER, Lutz, 66497 Contwig (DE)
(74) Vertreter: Fuchs Mehler Weiss & Fritzsche
(86) Internationale Anmeldenummer: PCT/EP2000/008880
(87) Internationale Veröffentlichungsnummer: WO 2001/020341

(56) Entgegenhaltungen:
- DE-A- 19 709 136
- US-A- 5 201 348
- US-A- 5 306 467
- PATENT ABSTRACTS OF JAPAN vol. 009, no. 122 (P-359), 28. Mai 1985 (1985-05-28) & JP 60 007340 A (DENKI KAGAKU KEIKI KK), 16. Januar 1985 (1985-01-16)
- PATENT ABSTRACTS OF JAPAN vol. 014, no. 290 (C-0731), 22. Juni 1990 (1990-06-22) & JP 02 092275 A (HITACHI LTD), 3. April 1990 (1990-04-03)

## Beschreibung

Die Erfindung betrifft eine Screening- und/oder Synthese-Vorrichtung zum Durchführen mindestens einer Grundoperation, wie Zugeben, Abgeben, Überführen, Umsetzen, Detektieren, an in Reaktionsgefäßen eines Substanzträgers, insbesondere einer Titerplatte, enthaltenen Proben mit mindestens einer Aufnahmeeinrichtung zur Aufnahme des Substanzträgers und ein entsprechendes Verfahren sowie die Anwendung einer solchen Screening- und/oder Synthese-Vorrichtung.

Derartige Screening- und/oder Synthese-Vorrichtungen dienen beispielsweise in der Gentechnik und Proteinchemie (Hochdurchsatz-Screening), der Molekularbiologie, der kombinatorischen Chemie und der pharmazeutischen Wirkstoffforschung zur vorzugsweise parallelen Durchführung einer der Grundoperationen, wie beispielsweise Zugeben, Abgeben, Überführen, Mischen, Umsetzen, Filtrieren, Verdampfen, Bestrahlen, Wärmetauschen, Detektieren, in Reaktionsgefäßen eines Substanzträgers, insbesondere einer Titerplatte. Die parallele Versuchsdurchführung schließt auch eine parallele Dosierung der vorzugsweise flüssige Proben sowie eine parallele Detektion, wie beispielsweise Fluoreszenzmessung, und Auswertung der Versuchsergebnisse ein. Hierzu weisen die bekannten Titerplatten standardisierte äußere Abmessungen und eine Anzahl von beispielsweise 96- bis zu 1536- Reaktionsgefäßen auf. Bei derartigen Titerplatten handelt es sich um großflächige und komplexe Bauteile, die üblicherweise durch Spritzgießen in großen Stückzahlen kostengünstig hergestellt werden. Eine Übersicht über Screening- und/oder Synthese-Vorrichtungen ist in Journal of Biomolecular Screening Vol.3, Number 1, 1998, "Challenges and Opportunities in High Throughput Screening: Implications for New Technologies" zu finden.

Kernproblem der spritzgußtechnischen Herstellung der Titerplatte ist eine hierdurch bedingte Durchbiegung bzw. Unebenheit der Grundfläche der Titerplatte, wobei der technische Aufwand zur Herstellung von ebenen Titerplatten mit steigender Zahl von Reaktionsgefäßen zunimmt. Beispielsweise liegt die Ebenheit der Grundfläche bei einer Titerplatte mit 96 Reaktionsgefäßen und Abmessungen von etwa 12 x 8 cm² im Vergleich zu einer ebenen Fläche bei einem Maximalwert der Durchbiegung von typischerweise 0,5 bis 1 mm. generell wird durch die Unebenheit der Titerplatte die Funktionalität von Screening- und /oder Synthese-Vorrichtungen bestimmt. Einerseits wird hierdurch die Dosierungsgenauigkeit der Probeaufnahme in das Reaktionsgefäß limitiert, da einzelne Tropfen der Probe nicht mehr ins gewünschte Reaktionsgefäß treffen. Andererseits wird hierdurch auch die Zuverlässigkeit der vorzugsweise parallelen optischen Auswertung der Versuchsergebnisse negativ beeinflußt, da durch die Durchbiegung der Titerplatten unterschiedliche Abstände zwischen Meßobjektiv und Reaktionsgefäß hervorgerufen werden, die bei der parallelen Detektion der Versuchsergebnisse zu unterschiedlichen Lagen der Foki der Meßobjektive in den einzelnen Reaktionsgefäßen führen. Aber auch bei einer zeitlich aufeinanderfolgenden Detektion der Reaktionsefäße bzw. der Komponenten einzelner Reaktionsgefäße können die vorgenannten Probleme auftreten, mit der Konsequenz, daß es zu unerwünschten Streuungen an den Wänden der Reaktionsgefäße kommt. Infolge der Durchbiegung der verwendeten Titerplatten kann es notwendig sein, die Meßobjektive während der Vermessung der Titerplatten in z-Richtung nachzujustieren, um brauchbare Meßergebnisse zu erhalten. Diese Vorgehensweise ist für Hochdurchsatz-Verfahren jedoch nur aufwendig zu realisieren.

Aus Patent Abstracts of Japan vol.009, no.122 (P-359), 28. Mai 1985 & JP 60007340A (Denki Kagaku Keiki KK) 16. Januar 1985 ist eine automatische Pipettiereinrichtung für Mikrotiterplatten bekannt, mit der eine simultane Injektion der Mikrotiterplatten ermöglicht werden soll. Hierzu ist eine Führungsplatte vorgesehen, die auf einer Grundplatte nach links und rechts bewegt werden kann. Über der Führungsplatte ist eine sogenannte Pick-up-Platte angeordnet, die Saugelemente aufweist. Ferner ist ein Injektionselement vorgesehen, das Injektionsdüsen aufweist. Eine Mikrotiterplatte wird auf der Führungsplatte montiert. Mittels der Injektonsplatte wird eine Lösung in die Mikrotiterplatte eingegeben und über die Pick-up-Platte abgesaugt.

Aus Patent Abstracts of Japan Vol.014, No. 290 (C-0731), 22. Juni 1990 & JP 02092275 A (Hitachi Ltd.), 3. April 1990 ist eine Trägerplatte bekannt, in der Zellen durch Unterdruck fixiert werden, der durch die Füllhöhe eines Wassertanks eingestellt wird. Die Trägerplatte wird anschließend mit einer Mikrokammerplatte in Kontakt gebracht, die die Zellen übernimmt.

Aufgabe der Erfindung ist es daher, eine Screening- und/oder Synthese-Vorrichtung mit Aufnahmeeinrichtung zur Aufnahme mindestens eines Substanzträgers, insbesondere mindestens einer Titerplatte, und ein Verfahren bereitzustellen, so daß herstellungsbedingte Durchbiegungen und Unebenheiten von Titerplatten vor und/oder während dem Durchführen der Grundoperation, vor allem vor dem parallelen Dosieren der Reaktonsgefaße und dem parallelen Detektieren der Reaktionsergebnisse, ausgegelichen bzw. beseitigt sowie die beschriebenen Nachteile vermieden werden.

Die erfindungsgemäße Lösung bezüglich der Vorrichtung dieser Aufgabe besteht darin, daß die Screening- und/oder Synthese-Vorrichtung mindestens eine Aufnahmeeinrichtung mit einer Planarisierungseinrichtung aufweist, die den Substanzträger vor und/oder während dem Durchführen der Grundoperation durch Beaufschlagen mit einer Andrück- und/oder Anziehkraft auf eine ebene Auflagefläche zumindest teilweise planarisiert. Besonders bevorzugt ist, daß die Planarisierung während der Durchführung der Grundoperation fortgesetzt wird.

Das hierbei einzusetzende erfindungsgemäße Verfahren gemäß Anspruch 17 besteht darin, daß der Substanzträger vor und/oder während dem Durchführen der Grundoperation durch Beaufschlagen mit einer Andrück- und/oder Anziehkraft auf eine ebene Auflagefläche zumindest teilweise planarisiert wird.

Vorzugsweise wird der Substanzträger in einer erfindungsgemäßen Screening- und/oder Synthese-Vorrichtung mit einer Planarisierungseinrichtung gemäß den Ansprüchen 1 bis 16 planarisiert.

Die erfindungsgemäße Screening- und/oder Synthese-Vorrichtung und das erfindungsgemäße Verfahren wird in der pharmazeutischen Wirkstoffsuche, in der kombinatorischen Chemie und/oder, wie beispielsweise bei biotechnischen Untersuchungen und/oder Synthesen, eingesetzt.

Durch die erfindungsgemäße Screening- und/oder Synthese-Vorrichtung mit Planarisierungseinrichtung werden herstellungsbedingte Durchbiegungen und/oder Unebenheiten der für die vorzugsweise parallele Versuchsdurchführung in Screening- und/oder Synthese-Vorrichtungen einzusetzenden großflächigen Titerplatte mit einer Vielzahl von Reaktionsgefäßen über die gesamte Grundfläche der Titerplatte ausgeglichen oder beseitigt. Generell wird durch die Erfindung die Funktionalität von hochintegrierten Screening- und/oder Synthese-Vorrichtungen mit einer Vielzahl von Reaktionsgefäßen verbessert, da Titerplatten mit herstellungsbedingten Durchbiegungen ohne Probleme eingesetzt werden können. Insbesondere wird die Zuverlässigkeit der parallelen Dosierung der Proben in die Reaktionsgefäße über der gesamten Grundfläche der Titerplatte verbessert, da durch die Beseitigung der Durchbiegungen bzw. Unebenheiten der Titerplatte die relative Lage der Reaktionsgefäße zueinander definiert und damit die Treffergenauigkeit der Proben sichergestellt ist. Damit wird auch eine exaktere Dosierung des Probenvolumens in die Reaktionsgefäße erreicht. Femer wird hierdurch die Zuverlässigkeit der parallelen optischen Auslesung bzw. Detektion der Versuchsergebnisse der durchgeführten Grundoperationen deutlich verbessert, da die Lage des Probenvolumens und damit die Lage der Foki der einzusetzenden Meßobjektive in den Reaktionsgefäßen der Titerplatte über der gesamten Grundfläche der Titerplatte vereinheitlicht bzw. parallelisiert ist. Eine zeitaufwendige Nachjustierung z.B. von Meßobjektiven beim Vermessen der Titerplatten ist nicht notwendig.

Die erfindungsgemäßen Screening-und/oder Synthese-Vorrichtungen zum Hochdurchsatz umfassen eine Reihe von Arbeitsstationen. Es können alle Typen von Arbeitsstationen enthalten sein, die dem Fachmann bekannt sind und als Arbeitsstationen von Screening- und/oder Synthese-Vorrichtungen geeignet sind. Bevorzugt umfassen die Vorrichtungen verschiedene Einrichtungen zur Substanzlagerung, Dosierstationen, Meßstationen, Transporteinrichtungen, Einrichtungen zur Online-Qualitätskontrolle, Einrichtungen zur Trennung von Substanzgemischen, Auswerteeinheiten, Steuereinheiten, Bestrahlungseinheiten, Einheiten zum Wärmetauschen, Filtereinheiten oder Verdampfungseinheiten.

Die erfindungsgemäßen Screening- und/oder Synthese-Vorrichtungen umfassen vorzugsweise mindestens eine Steuereinheit. Vorzugsweise werden Computer, die den Ablauf der Screening- und/oder Synthese-Verfahren steuern, d.h. die einzelnen Arbeitsstationen koordinieren und/oder die Durchführung der Grundoperationen steuern, verwendet.

Weiterhin umfassen die erfindungsgemäßen Vorrichtungen vorzugsweise mindestens eine Transporteinrichtung zum Transport der Substanzträger zwischen den einzelnen Arbeitsstationen und/oder Einrichtungsbestandteilen. Dabei handelt es sich vorzugsweise um Plattenmanipulatoren zur aktiven Positionierung der Platten in den Arbeitsstationen, insbesondere in Form von Greifvorrichtungen.

Die erfindungsgemäßen Screening- und/oder Synthese-Vorrichtungen umfassen ferner vorzugsweise mindestens eine Einrichtung zur Substanzlagerung, der in den einzelnen Arbeitsschritten verwendeten Substanzen. Die Einrichtungen zur Substanzlagerung umfassen vorzugsweise Substanzträger oder Flaschen, gegebenenfalls mit besonderen Einrichtungen zum Verhindern von Kontaminationen oder Verdunstungen.

Die erfindungsgemäßen Vorrichtungen umfassen weiterhin vorzugsweise mindestens eine Einrichtung zur Trennung von Substanzgemischen. Bei den Einrichtungen zur Trennung von Substanzgemischen kann es sich um alle Einrichtungen zur Trennung von Substanzgemischen handeln, die dem Fachmann bekannt sind und die zum Hochdurchsatz fähig sind. Dazu zählen beispielsweise HPLC-, CE- und CEC-Systeme. Die Einrichtungen zur Trennung von Substanzgemischen umfassen vorzugsweise weiterhin Fraktionssammler, die zur Aufnahme von geringen Flüssigkeitsmengen, z.B. Nano-Liter-Mengen, geeignet sind.

Zusätzlich umfassen die erfindungsgemäßen Vorrichtungen vorzugsweise mindestens eine Dosierstation. Die Dosierstationen umfassen Pipettiersysteme und/oder Dispensiersysteme, die vorzugsweise piezoelektrisch gesteuert werden. Diese Systeme ermöglichen den Umgang bis hin zu kleinsten Flüssigkeitsmengen und die schnelle und reproduzierbare Zugabe von Komponenten in beispielsweise Nano-Liter-Mengen.

Erfindungsgemäß umfassen die Screening- und/oder Synthese-Vorrichtungen vorzugsweise mindestens eine Meßstation. Die Meßstationen umfassen selbst mindestens eine Detektionseinheit. Die Detektionseinheiten umfassen mindestens ein Detektionselement. Die Detektionseinheiten dienen der Detektion der Eigenschaften von in den Reaktionsgefäßen der Substanzträger enthaltenen Proben. Es können alle dem Fachmann bekannten Detektionseinheiten bzw. Detektionsverfahren verwendet werden. Detektionsverfahren, die in der erfindungsgemäßen Vorrichtung vorzugsweise verwendet werden können, umfassen insbesondere solche, die auf Radioaktivität, Kolorimetrie, Phosphoreszenz oder Fluoreszenz basieren.

Bei der Detektion von Phosphoreszenz oder Fluoreszenz umfassen die Meßstationen weiterhin vorzugsweise mindestens eine Optikeinheit zum Einkoppeln elektromagnetischer Strahlung in die Probe und zum Überführen der von den Proben emittierten Strahlung zu den Detektionseinheiten. Vorzugsweise werden konfokale Optiken und/oder Nahfeldoptiken eingesetzt.

Die erfindungsgemäße Vorrichtung ist besonders geeignet zur Fluoreszenz-Spektroskopie in Kombination mit konfokalen Optiken.

Die erfindungsgemäßen Vorrichtungen sind weiterhin für die Verwendung von Imaging-Systemen, die einen Substanzträger im wesentlichen komplett zu einem bestimmten Zeitpunkt abbilden, geeignet. Dabei handelt es sich insbesondere um Systeme, bei denen der Substanzträger auf einer durchsichtigen Meßsystemplatte, wie z.B. einer planaren Glasplatte aufliegt, insbesondere in Verbindung mit einer telezentrischen Linse.

Meßmethoden, die beispielsweise in Zusammenhang mit den erfindungsgemäßen Vorrichtungen verwendet werden können, umfassen Photonenverteilungsanalysen, insbesondere FIDA- und 2-D-FIDA, Fluoreszenz-Lebensdauer-Analysen, Fluoreszenz-Polarisationsanalysen, Auto- und Kreuzkorrelationsanalysen der zeitlich erfaßten Photonen oder Kombinationen davon.

Die erfindungsgemäßen Screening- und/oder Synthese-Vorrichtungen umfassen zusätzlich vorzugsweise mindestens eine Auswerteeinheit. Als Auswerteeinheiten werden bevorzugt hochleistungsfähige Computer verwendet, die die Signalaufnahme und -prozessierung steuern.

Alle Stationen der erfindungsgemäßen Screening- und/oder Synthese-Vorrichtung umfassen vorzugsweise mindestens eine Einrichtung zur Online-Qualitätskontrolle, z.B. in Form von Kameras oder Sensoren. Diese Einrichtungen ermöglichen die Online-Verfolgung des Screening- und/oder Syntheseprozesses. Die überwachten Parameter durchlaufen einen Rückkopplungs- und/oder Verbesserungsprozeß und ermöglichen so einen effizienten und zuverlässigen Ablauf der einzelnen Arbeitsschritte.

Weiterhin umfassen die erfindungsgemäßen Screening- und/oder Synthese-Vorrichtung vorzugsweise mindestens ein Filtersystem zur Aufreinigung der verwendeten Substanzen oder Substanzgemische.

Zur Bestrahlung der Proben können die Vorrichtungen ferner bevorzugt mindestens eine Bestrahlungseinheit umfassen, um die Proben z.B. mit biologisch aktiver Strahlung, insbesondere mit UV-Strahlung, zu bestrahlen.

Zur Temperierung der Proben umfassen die Vorrichtungen vorzugsweise mindestens eine Einheit zum Wärmetauschen.

Die einzelnen Arbeitsstationen sind vorzugsweise in einer Art und Weise ausgestaltet, daß die Screening- und/oder Synthese-Vorrichtung automatisch betrieben werden kann.

Planarisierungseinrichtungen gemäß der Erfindung sind vorzugsweise in allen Arbeitsstationen der Screening- und/oder Synthese-Vorrichtungen enthalten. Besonders bevorzugt enthalten die Dosier- und Meßstationen mindestens eine Planarisierungseinrichtung.

Die Planarisierungseinrichtungen gemäß der Erfindung können integraler Bestandteil der Aufnahmeeinrichtung sein oder als Modul in die Aufnahmeeinrichtung eingeführt werden. Insbesondere ist hierdurch ein Nachrüsten einer Aufnahmeeinrichtung mit einer Planarisierungseinrichtung gemäß der Erfindung ermöglicht. Vorzugsweise ist die Planarisierungseinrichtung integraler Bestandteil der Aufnahmeeinrichtung.

Die Planarisierungseinrichtungen gemäß der Erfindung weisen vorzugsweise mindestens eine Sensoreinheit auf. Bei dieser Sensoreinheit handelt es sich vorzugsweise um optische, mechanische oder elektrische Sensoren, die nach dem Einlegen des Substanzträgers in die Planarisierungseinrichtung oder vor oder während dem Durchführen der in den jeweiligen Arbeitsstationen durchgeführten Grundoperationen den Planarisierungsvorgang initiieren.

Durch die Planarisierungseinrichtung gemäß der Erfindung ist es möglich, die verwendeten Substanzträger vor der Durchführung einer Grundoperation zu planarisieren. Vorteilhafterweise ist es nach diesem bevorzugten Verfahren nicht mehr erforderlich, die Optik der verwendeten Mikroskope während der Vermessung eines Substanzträgers, aufgrund von Unebenheiten und/oder Durchbiegungen, nachzujustieren.

Nach einer besonders bevorzugten Ausführungsform der Erfindung weist die Planarisierungseinrichtung zum Andrücken und/oder Anziehen des Substanzträgers auf die Auflagefläche eine Unterdruckeinrichtung auf. Die Unterdruckeinrichtung dient zum Anlegen eines Unterdrucks an die in der Aufnahmeeinrichtung aufgenommenen Titerplatten. Hierdurch werden die Titerplatten auf die ebene Auflagefläche angedrückt bzw. angezogen. Vorzugsweise ist die Planarisierungseinrichtung der erfindungsgemäßen Screening- und/oder Synthese-Vorrichtung derart ausgestaltet, daß im Falle des Beaufschlagens des Substanzträgers mit einer Anziehkraft in Form eines Vakuums, der Substanzträger nicht als Ganzes von dem Vakuum umgeben ist, sondern das Vakuum nur auf den Boden des Substanzträgers wirkt. Hierdurch wird in vorteilhafter Weise ein Verdunsten von Probenflüssigkeit und somit z.B. eine Verfälschung der Meßergebnisse verhindert.

Nach einer konstruktiv besonders vorteilhaften Ausführungsform weist die Unterdruckeinrichtung mindestens einen mit der Auflagefläche in Verbindung stehenden Vakuumkanal auf, der mit einer Unterdruckquelle in Verbindung steht. Die Unterdruckeinrichtung wird hierzu vorzugsweise über einen Vakuumstutzen mit der Unterdruckquelle verbunden, so daß lediglich eine Vakuumpumpe zum Evakuieren der Unterdruckeinrichtung und damit zum Andrücken und/oder Anziehen der Titerplatte auf die ebene Auflagefläche ausreicht. In der bevorzugten Ausführungsform wird der Unterdruck während der Durchführung der Grundoperation gehalten. Auch denkbar ist, daß der Unterdruck lediglich solange an die ebene Auflagefläche angelegt bleibt, bis die Durchbiegung der Titerplatte beseitigt ist.

Nach einer anderen konstruktiv besonderen vorteilhaften Ausführungsform ist der Vakuumkanal in einer ebenen Auflageplatte derart angeordnet, daß die Auflageplatte auf der dem Substanzträger zugewandten Auflageseite mehrere Ansaugnuten aufweist. Durch die vorzugsweise auf der Auflageseite verteilt angeordneten Ansaugnuten wird die Titerplatte mit ihrer gesamten Grundfläche, also flächenhaft, auf die ebene Auflagefläche angezogen bzw. angedrückt. Auch denkbar ist, daß in der Auflageseite der Auflageplatte Vakuumdichtungen integriert sein können, um die Unterdruckquelle abschalten und dennoch nach dem Verschließen der Unterdruckeinrichtung mittels eines Vakuumverschlusses einen dauerhaften Unterdruck an den Substanzträger anlegen zu können. Bei dieser Ausführungsform bildet die Auflageseite der Auflageplatte die Auflagefläche.

Nach einer anderen bevorzugten Ausführungsform ist zwischen dem Substanzträger und der Auflageseite der Auflageplatte eine Vakuumplatte angeordnet, wobei die Oberseite der Vakuumplatte die Auflagefläche bildet. Auch diese Ausführungsform ermöglicht ein flächenhaftes Anziehen der Titerplatte, da die Vakuumplatte zum homogenen Anziehen des Substanzträgers mindestens eine poröse Schicht aufweist. Die poröse Schicht kann beispielsweise aus Sintermetall, Kunststoff oder einem anderen geeigneten Material bestehen. Hierdurch entstehen auf der Oberseite der Vakuumplatte eine Vielzahl von mit der Schicht in Verbindung stehende Ansaugöffnungen.

Nach einer weiteren anderen bevorzugten Ausführungsform weist die Planarisierungseinrichtung zum Andrücken des Substanzträgers auf die Auflagefläche eine mit Kraft beaufschlagbare Andruckplatte auf. Hierdurch wird eine gerichtete von der Andruckplatte in Richtung der Titerplatten weisende Presskraft derart erzeugt, daß die Titerplatten auf die ebene Auflagefläche gedrückt werden.

Nach einer besonders vorteilhaften Ausführungsform ist die Andruckplatte von oben durch mechanische Kraft beaufschlagbar. Vorzugsweise ist die Andruckplatte von oben, d.h. der Titerplatte abgewandten Seite, durch mechanische Kraft beaufschlagbar. Hierdurch wird die Andruckplatte vorzugsweise mittels der der Titerplatte zugewandten Seite von oben auf die Öffnungen der Reaktionsgefäße der Titerplatte gepresst, die hierdurch planarisiert wird.

Nach einer weiteren besonders vorteilhaften Ausführungsform ist die Andruckplatte durch elektromagnetische Kraft beaufschlagbar. Bei dieser Ausführungsform sind vorzugsweise in der Andruckplatte und/oder in der ebenen Auflagefläche Magnete anzuordnen, die zum Beseitigen der Durchbiegung der Titerplatte einen elektromagnetischen Kraftschluss erzeugen. Vorteilhafterweise sind hierbei auch Elektromagnete einzusetzen, da hierdurch die Möglichkeit gegeben ist, den Kraftschluss nach der Beseitigung der Durchbiegung der Titerplatte wieder zu lösen, um beispielsweise die Titerplatte innerhalb der Screening- und/oder Synthese-Vorrichtung zu einer weiteren Aufnahmeeinrichtung einer weiteren Arbeitsstation zur Durchführung einer der genannten Grundoperationen, wie beispielsweise Zugeben, Abgeben, Überführen, Mischen, Umsetzen, Filtrieren, Verdampfen, Bestrahlen, Wärmetauschen, Detektieren, weiterzubefördern.

Ein besonderer Gedanke der Erfindung besteht darin, daß nur Teilbereiche der Titerplatten mit einer Andrück- und/oder Anziehkraft auf eine ebene Auflagefläche beaufschlagt und damit planarisiert werden. Hierzu weist in einer bevorzugten Ausführungsform die Andruckplatte zum Andrücken des Substanzträgers auf die ebene Auflagefläche mehrere Andruckstifte auf. Auch denkbar ist, daß hierzu in der Auflageplatte nur in lokalen Bereichen Magnete oder Ansaugnuten bzw. -öffnungen angeordnet werden.

Um eine Beschädigung der Reaktionsgefäße der Titerplatte zu vermeiden, sind die Andruckstifte derart auf der Andruckplatte verteilt angeordnet, daß sie auf Wandbereiche zwischen zwei Reaktionsgefäßen des Substanzträgers aufdrücken.

Ein anderer besonderer Gedanke der Erfindung besteht darin, die Ausgestaltung der Andruckplatte den Anforderungen der jeweils durchzuführenden Grundoperationen anzupassen. In einer bevorzugten Ausführungsform weist hierzu die Andruckplatte mindestens eine Ausnehmung derart auf, daß für die Durchführung mindestens einer der in Anspruch 1 genannten Grundoperationen die Reaktionsgefäße frei zugänglich sind.

Als für die Herstellung der Ausnehmungen besonders einfache Ausführungsform, sind die Ausnehmungen als auf der Andruckplatte in gleichem Rastermaß wie die Reaktionsgefäße auf dem Substanzträger angeordnete Bohrungen ausgebildet. Hierdurch wird beispielsweise das Zugeben oder Abgeben einer vorzugsweise flüssigen Probe von oben in die bzw. aus den Reaktionsgefäßen der Titerplatte ermöglicht.

Ein anderer besonderer Gedanke der Erfindung besteht darin, den inneren Aufbau der Auflageplatte mit ebener Auflagefläche und gegebenenfalls der Vakuumplatte den Anforderungen der jeweils durchzuführenden Grundoperationen anzupassen. In einer hierzu bevorzugten Ausführungsform für eine Meßstation der Screening- und/oder Synthesevorrichtung weist die Auflageplatte und/oder Vakuumplatte zur Aufnahme und/oder zum Anschluß von Detektionselementen eine Vielzahl von Meßkanälen auf, die in gleichem Rastermaß wie die Reaktionsgefäße auf dem Substanzträger angeordnet sind. Zum einen ist hierdurch eine Detektion, wie beispielsweise eine optische Fluoreszenzmessung, vorzugsweise in Transmission von unten durch den Boden der Titerplatte hindurch ermöglicht, wobei die Meßkanäle derart ausgeführt werden, daß der Strahlengang nicht beeinträchtigt ist. Zum anderen können unter Verwendung einer zuvor beschriebenen als Lochplatte ausgeführten Andruckplatte die optischen Messungen auch von oben durch die Probe hindurch in Transmission durchgeführt werden, wobei optische Meßelemente, wie beispielsweise optische Detektionselemente, in den Meßkanälen oder diesen direkt gegenüberliegend außerhalb der Auflageplatte angeordnet werden. In einer hierzu bevorzugten Ausführungsform besteht die Auflageplatte und/oder zumindest der Boden der Auflageplatte aus transparentem Material, wie beispielsweise Kunststoff, Glas oder Quarzglas. Auch denkbar ist, daß die in der Auflageplatte angeordneten Meßkanäle derart, beispielsweise mit einem Vakuumstutzen, ausgeführt werden, daß sie direkt als Vakuumkanäle verwendbar sind.

Die erfindungsgemäßen Vorrichtungen eignen sich sehr gut zur Verwendung in chemischen und/oder biotechnischen Untersuchungen und/oder Synthesen.

Die erfindungsgemäßen Vorrichtungen sind sehr gut für Synthese-Verfahren einsetzbar, in denen Hochdurchsatz notwendig ist. Beispielsweise sind sie sehr gut verwendbar in Syntheseverfahren, die auf kombinatorischer Chemie beruhen. Auf diesem Weg ist es möglich, breit gefächerte Substanzbanken bestehend aus einer Vielzahl von Substanzen innerhalb kürzester Zeit auf einfachem Wege herzustellen. Im Bereich der kombinatorischen Chemie ist es üblich, Substanzen an der Oberfläche von synthetischen Mikropartikeln, d.h. Polymerkügelchen, zu synthetisieren.

Insbesondere kann die erfindungsgemäße Vorrichtung zur Identifizierung und Validierung von Targets, d.h. spezifischen biologischen Molekülen, wie Enzymen, Rezeptoren oder Ionenkanälen, die möglicherweise für bestimmte Krankheiten oder ihre Symptome von Bedeutung sind, verwendet werden, da die meisten Wirkstoffe durch ihre Bindung ein Target dessen biologische Funktion beeinflussen. Desweiteren kann die Vorrichtung sehr gut zur Identifizierung von biologisch aktiven Substanzen und/oder pharmazeutischen Wirkstoffen eingesetzt werden. Durch die Fähigkeit des Systems zum Hochdurchsatz können deutlich mehr Substanzen innerhalb kurzer Zeit in Bezug auf ihre biologische Aktivität und/oder pharmazeutische Wirksamkeit untersucht werden. Dies ist von besonderer Bedeutung, um die mittels kombinatorischer Chemie erhaltenen Substanzbanken in Bezug auf ihre Wirksamkeit zu untersuchen. Es ist mit der erfindungsgemäßen Vorrichtung möglich, Hochdurchsatz zu erreichen und zwischen mehreren Tausend bis zu 100000 Substanzen pro Tag zu untersuchen. Dies ist mit den bisher bekannten Vorrichtungen des Standes der Technik nicht möglich.

Die erfindungsgemäße Vorrichtung ist weiterhin sehr gut für die Durchführung von Assay-Verfahren geeignet. Bei diesen Assay-Verfahren werden Targets und chemische Verbindungen zur Untersuchung von chemischen und/oder biologischen Wechselwirkungen kombiniert. Es ist somit auf einfachem Wege möglich, ein Modellsystem zu etablieren, das es erlaubt, Substanzen zu identifizieren, die das Target in der gewünschten Weise beeinflussen. Die erfindungsgemäße Vorrichtung kann sowohl für biochemische als auch zelluläre Assay-Verfahren verwendet werden. Eingeschlossen sind dabei auch Assay-Verfahren die auf der Verwendung von vesikulären Partikeln oder synthetischen Mikropartikeln basieren.

Die erfindungsgemäße Vorrichtung eignet sich weiterhin sehr gut zur Durchführung von Assay-Verfahren, die auf der Verwendung von vereinfachten Modellsystemen beruhen, die die Physiologie im Menschen oder im Tier nachbilden. Dies bedeutet, die Assay-Systeme können u.a. dazu verwendet werden, Informationen über die Löslichkeit von biologisch aktiven und/oder pharmazeutisch wirksamen Substanzen im Blutplasma, ihre Penetrationseigenschaften, ihre Leber-Toxizität, ihre Bioverfügbarkeit, ihre Stabilität im Blut oder ihre Abbauprofile nach Passage der Leber zu erhalten.

Die chemischen und biotechnischen Untersuchungen können beispielsweise i) zur Identifizierung und Charakterisierung von biologischem Material oder chemischen Verbindungen, ii) zur Identifizierung und/oder Validierung von Targets, iii) zur Suche nach biologisch aktiven Substanzen und/oder pharmazeutischen Wirkstoffen, iv) zur Identifizierung von Leitstrukturen, v) zur Genomanalyse, vi) zur Proteomanalyse oder vii) zur Reinigung und Konzentrierung von Substraten verwendet werden.

Es ist das Merkmal der erfindungsgemäßen Vorrichtung, daß sie zum Hochdurchsatz verwendet werden kann. Die erfindungsgemäße Vorrichtung ermöglicht es im Vergleich zu den bekannten Vorrichtungen des Standes der Technik, eine deutlich größere Menge von Daten pro Zeit zu generieren und führt somit zu einer wesentlichen Steigerung der Effektivität und Zuverlässigkeit der Wirkstoffforschung.

Weitere Ziele, Vorteile, Merkmale und Anwendungsmöglichkeiten der vorliegenden Erfindung ergeben sich aus der nachfolgenden Beschreibung mehrerer Ausführungsbeispiele anhand der Zeichnungen. Dabei bilden alle beschriebenen und/oder bildlich dargestellten Merkmale für sich oder in beliebiger sinnvoller Kombination den Gegenstand der Erfindung, auch unabhängig von ihrer Zusammenfassung in den Ansprüchen oder deren Rückbeziehung.

Es zeigen:
- Figur 1: a) einen Schnitt und b) eine Draufsicht auf einen Ausschnitt einer planarisierten Titerplatte mit 1536 Reaktionsgefäßen.
- Figur 2: einen Schnitt einer Titerplatte gemäß Figur 1 mit herstellungsbedingter Durchbiegung.
- Figur 3: Titerplatte gemäß Figur 2 in einer Aufnahmeeinrichtung einer Screening- und/oder Synthese-Vorrichtung mit einer Ausführungsform der erfindungsgemäßen Planarisierungseinrichtung für eine Dosierstation.
- Figur 4: Titerplatte gemäß Figur 2 in einer Aufnahmeeinrichtung einer Screening- und/oder Synthese-Vorrichtung mit einer weiteren Ausführungsform der erfindungsgemäßen Planarisierungseinrichtung für eine Meßstation.
- Figur 5: eine Andruckplatte zur Planarisierung von Titerplatten für eine Dosierstation.
- Figur 6: eine Andruckplatte zur Planarisierung von Titerplatten für eine Meßstation.
- Figur 7: Andruckstifte zur Planarisierung von Titerplatten für eine Meßstation.

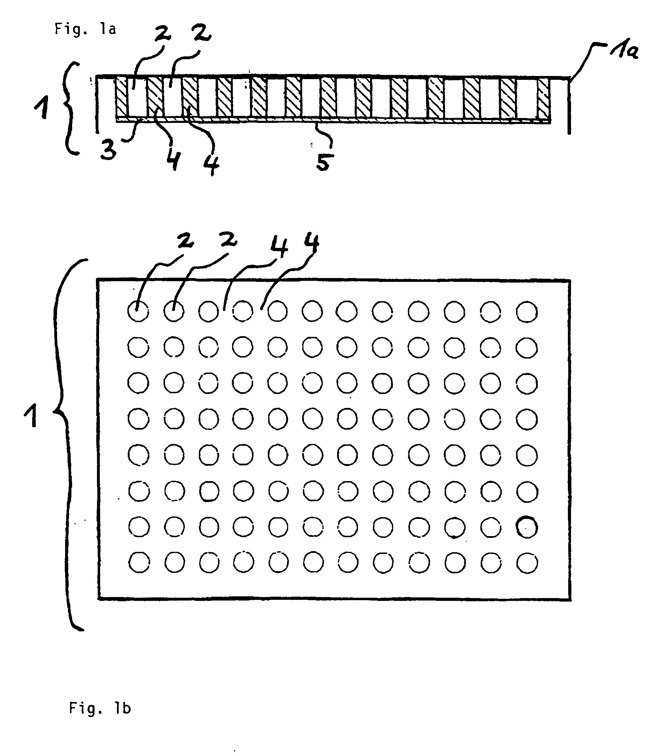

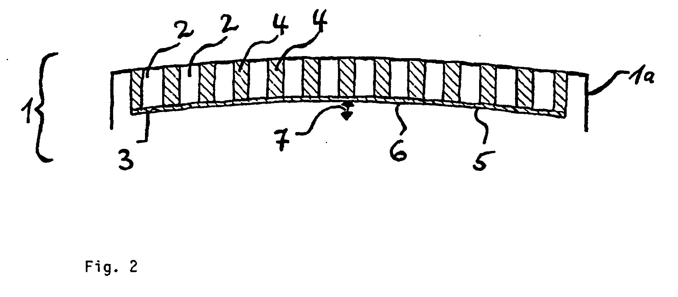

Die Figur 1 zeigt einen ideal ebenen Substanzträger 1 in Form eines Ausschnitts von 96 Reaktionsgefäßen 2 aus einer Titerplatte 1 mit 1536 Reaktionsgefäßen 2 und Titerplattenboden 3, wobei die Reaktionsgefäße 2 durch Wandbereiche 4 voneinander getrennt sind, sowie mit ebener Grundfläche 5. Generell weisen Titerplatten 1 einen Titerplattenrahmen 1a und standardisierte äußere Abmessungen auf, wobei die Reaktionsgefäße 2 mit vorgegebenem Probenvolumen und Rastermaß in einer Matrixanordnung angeordnet sind. Die in Figur 1 gezeigte Titerplatte 1 weist eine Grundfläche 5 von etwa 8 x 12 cm, ein Rastermaß von 2,25 mm und ein Probenvolumen von etwa 1 µl auf. Derartige Titerplatten 1 werden durch Spritzgießen hergestellt und weisen, da es sich bei Titerplatten 1 um großflächige und komplexe Bauteile handelt, herstellungsbedingte Durchbiegungen 6 und/oder Unebenheiten auf, wie dies die Figur 2 zeigt.

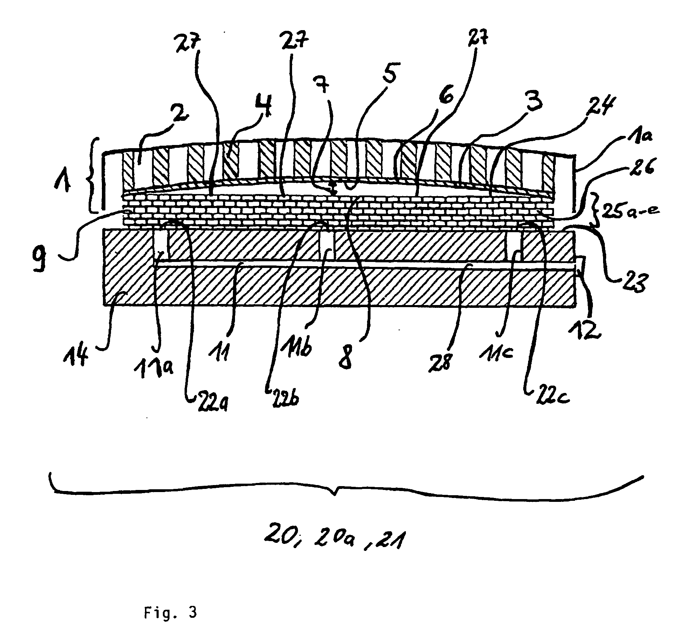

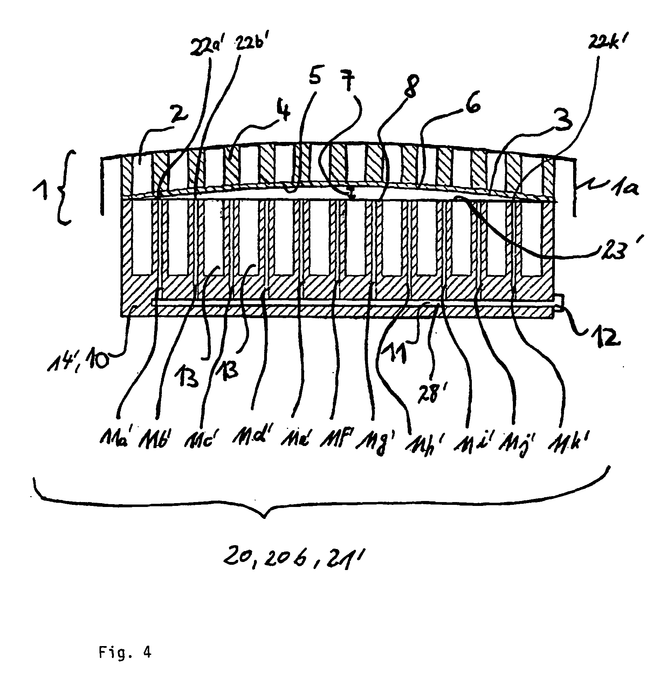

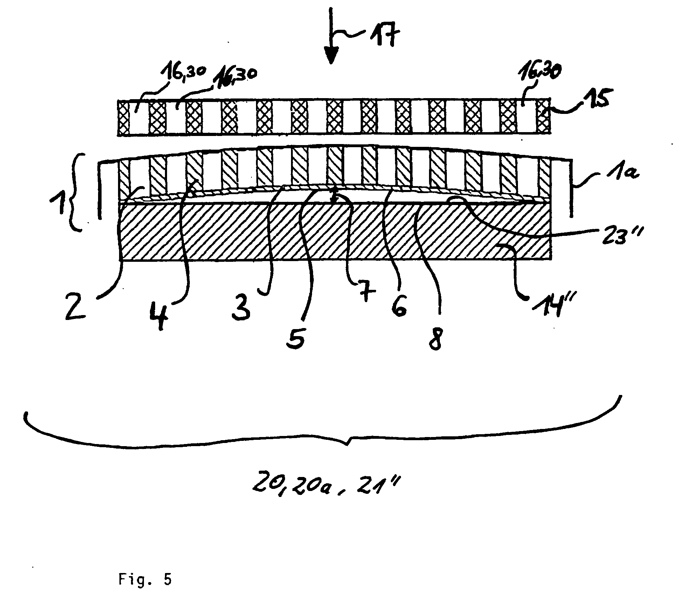

Die Titerplatten 1 werden in Figuren 3 bis 7 extrem vereinfacht dargestellten Screening- und/oder Synthese-Vorrichtungen in verschiedenen Bereichen chemischer und/oder biologischer Untersuchungen, wie beispielsweise in der Gentechnik und Proteinchemie (Hochdurchsatz-Screening), der Molekularbiologie, der kombinatorischen Chemie und der pharmazeutischen Wirkstofforschung zur parallelen Durchführung von verschiedenen Grundoperationen, wie beispielsweise Zugeben, Abgeben, Überführen, Mischen, Umsetzen, Filtrieren, Verdampfen, Bestrahlen, Wärmetauschen, Detektieren, an in den Reaktionsgefäßen 2 enthaltenen vorzugsweise flüssigen Proben eingesetzt. Hierzu weisen die bekannten Screening- und/oder Synthese-Vorrichtungen meist mehrere hintereinander angeordnete automatisierte Arbeitsstationen mit entsprechenden Aufnahmeeinrichtungen 20 für die Titerplatte 1 auf. Typische Arbeitsstationen einer Screening- und/oder Synthese-Vorrichtung sind eine in Figuren 3 und 5 vereinfacht dargestellte Dosierstation 20a mit vorzugsweise auf einem Pipettiersystem beruhenden Mehrfach-Parallel-Dosiersystem zur kontrollierten Flüssigkeitsabgabe bzw. -aufnahme in die Reaktionsgefäße 2 und eine in Figuren 4, 6 und 7 vereinfacht dargestellte Meßstation 20b mit beispielsweise einem auf einer CCD-Kamera oder einem konfokalen Mikroskop beruhenden Mehrfach-Parallel-Meßsystems zur Messung und Auswertung der Versuchsergebnisse der durchgeführten Grundoperationen.

Für die Durchführung von Detektionen, wie beispielsweise optische Transmissionsmessungen, durch den Boden 3 der Titerplatte 1 hindurch bedarf es dünner und transparenter Böden 3, die den optischen Strahlengang nicht beeinträchtigen dürfen. Neben der Bodendicke, der optischen Transparenz und der Bodenrauhigkeit beeinflußt insbesondere auch die Ebenheit des Bodens 3 die Reproduzierbarkeit der optischen Messung, da durch die in Figur 2 gezeigte Unebenheit bzw. Durchbiegung 6 im Boden 3 der Titerplatte 1 unterschiedliche Lagen der Foki der Meßobjektive in den Reaktionsgefäßen 2 resultieren. Dadurch kann es z. B. erforderlich sein, die Meßobjektive während der Untersuchung verschiedener Substanzträger fortlaufend in z- Richtung nachzujustieren. Gemäß Figur 2 wird durch die Unebenheit bzw. Durchbiegung 6 im Boden 3 der Titerplatte 1 auch eine Variation 7 in der Lage der Reaktionsgefäße 2 über die gesamte Grundfläche 5 der Titerplatte 1 hervorgerufen. Hierdurch treffen bei Mehrfach-Parallel-Dosiersystemen einzelne Tropfen nicht mehr in das vorgesehene Reaktionsgefäß 2, so daß die meist geforderte hohe Genauigkeit des Probenvolumens nicht mehr eingehalten wird. Darüber hinaus können hierdurch Querkontaminationen in benachbarten Reaktionsgefäßen 2 verursacht werden, die die Versuchsergebnisse verfälschen. Daher wird üblicherweise die Durchbiegung 6 und Variation 7 der Titerplatten 1 vor dem Einsatz in Screening- und/oder Synthese-Vorrichtungen durch aufwendige und separate Nachbehandlungen auf ein vertretbares Maß reduziert.

Um dennoch handelsübliche durchgebogene Titerplatten 1 in Screening- und/oder Synthese-Vorrichtungen ohne aufwendige und separate Nachbehandlung einzusetzen zu können, zeigt die Figur 3 eine Ausführungsform der erfindungsgemäßen Planarisierungseinrichtung 21 für eine Aufnahmeeinrichtung 20 am Beispiel einer schematisch dargestellten Dosierstation 20a. Generell dient die erfindungsgemäße Planarisierungseinrichtung 21 zum Planarisieren der Titerplatte 1 nach deren Aufnahme in die Aufnahmeeinrichtung 20, wobei hierzu die Titerplatte 1 vor dem Durchführen der Grundoperation, wie beispielsweise Flüssigkeitsabgabe bzw. -aufnahme, durch Beaufschlagen mit einer Andrück- und/oder Anziehkraft auf eine ebene Auflagefläche 8 planarisiert wird.

Bei dem hier dargestellten Ausführungsbeispiel weist die Planarisierungseinrichtung 21 eine ebene Auflageplatte 14 mit Auflageseite 23 und eine darauf angeordnete Vakuumplatte 9 mit Oberseite 24 auf, die bei diesem Ausführungsbeispiel die ebene Auflagefläche 8 bildet. Zunächst wird die zu planarisierende Titerplatte 1 auf die Oberseite 24 der Vakuumplatte 9 aufgelegt. Nachfolgend wird mittels einer in die Auflageplatte 14 integrierten Unterdruckeinrichtung 28 ein Unterdruck an die Oberseite 24 der Vakuumplatte 9 angelegt und hierdurch die Titerplatte 1 auf die ebene Auflagefläche 8 angezogen bzw. angedrückt. Die Unterdruckeinrichtung 28 weist hierzu einen Vakuumkanal 11 und einen Vakuumstutzen 12 auf, der mit einer hier nicht dargestellten Unterdruckquelle in Verbindung steht.

Um die Titerplatte 1 nahezu gleichmäßig über die gesamte Grundfläche 5, also flächenmäßig, durch den Unterdruck zu erfassen und hierdurch die Titerplatte 1 auf die ebene Auflagefläche 8 zu ziehen, ist der Vakuumkanal 11 in der Auflageplatte 14 in Querrichtung verlaufend angeordnet und weist mehrere senkrecht zu der Titerplatte 1 zugewandten Auflageseite 23 führende Vakuumverzweigungskanälen 11 a-c auf. Die Vakuumverzweigungskanäle 11 a-c münden in der Auflageseite 23 der Auflageplatte 14 und hierdurch entstehen auf der Auflageseite 23 mehrere verteilt angeordnete Ansaugnuten 22a-c. Zum homogenen flächenhaften Anziehen der Titerplatte 1 weist die auf der Auflageseite 23 angeordnete Vakuumplatte 9 bei dem hier dargestellten Ausführungsbeispiel mehrere poröse Schichten 25a-e auf, die aus mit versetzt gegeneinander angeordneten Durchbrüchen 26 ausgebildet sind.

Hierdurch entstehen auf der Oberseite 24 der Vakuumplatte 9 eine Vielzahl von mit den Schichten 25a-e in Verbindung stehende Ansaugöffnungen 27.

Die Titerplatte 1 wird mittels dem nun jeweils an den Ansaugöffnungen 27 anliegenden Unterdruck entlang ihrer gesamten Grundfläche 5 auf die ebene Auflagefläche 8 bzw. die Oberseite 24 der Vakuumplatte 9 angezogen, und damit flächenmäßig planarisiert. Hierbei wird der Unterdruck entweder während der Durchführung der Grundoperationen aufrecht erhalten oder zumindest solange bis eine Planarisierung bzw. ebene Titerplatte 1 gemäß Figur 1 erreicht ist. Wie der Vergleich der beiden in Figur 1 und 3 dargestellten Titerplatten 1 zeigt, wird durch die Planarisierung der Titerplatte 1 eine Verbesserung der Funktion einer Dosierstation 20a einer Screening- und Synthese-Vorrichtung erreicht, da die Durchbiegung 6 und die Variation 7 der Lage der Reaktionsgefäße 2 gemäß Figur 3 beseitigt ist. Hierdurch wird insbesondere bei Mehrfach-Parallel-Dosiersystemen eine exaktere Dosierung der Probenflüssigkeiten in die Reaktionsgefäße 2 sichergestellt.

Die Figur 4 zeigt eine Ausführungsform der erfindungsgemäßen Screening- und Synthese-Vorrichtung mit Planarisierungseinrichtung 21' für eine Aufnahmeeinrichtung am Beispiel einer schematisch dargestellten Meßstation 20b. Die Planarisierungseinrichtung 21' weist eine Auflageplatte 14' in Form einer Meßsystemplatte 10 mit ebener Auflageseite 23' auf, die bei diesem Ausführungsbeispiel die ebene Auflagefläche 8 bildet. Zum Planarisieren der Titerplatte 1 wird diese direkt auf die Auflagefläche 8 aufgelegt und ein Unterdruck mittels einer gemäß Figur 3 nun in der Meßsystemplatte 10 integrierten Unterdruckeinrichtung 28' erzeugt. Hierdurch wird die Titerplatte 1 auf die ebene Auflagefläche 8 angezogen bzw. angedrückt und so die Durchbiegung 6 sowie die Variation 7 der Lage der Reaktionsgefäße 2 beseitigt. Wiederum wird der Unterdruck während der Durchführung der Grundoperationen oder zumindest solange bis eine ebene Titerplatte 1 gemäß Figur 1 erreicht ist aufrecht erhalten. Auch denkbar ist, daß in der Auflageseite 23' mehrere Vakuumdichtungen derart angeordnet sind, daß die Titerplatte 1 auch nach dem Verschließen des Vakuumstutzens 12 und dem Abschalten der Unterdruckeinrichtung 28' dauerhaft während der Durchführung der Grundoperationen auf die ebene Auflagefläche 8 angezogen wird.

Im Unterschied zur Auflageplatte 14 in Figur 3 weist die Meßsystemplatte 10 in Figur 4 zusätzlich eine Vielzahl von integrierten Meßkanälen 13 auf. Diese Meßkanäle 13 sind bei dem hier dargestellten Ausführungsbeispiel als Sackbohrungen ausgebildet und in gleichem Rastermaß wie die Reaktionsgefäße 2 der Titerplatte 1 zwischen jeweils zwei Vakuumverzweigungskanälen 11a'-k' angeordnet. Durch diese Anordnung der Meßkanäle 13 sind optische Transmissionsmessungen mit einem Strahlengang durch den Boden 3 der Titerplatte 1 hindurch ermöglicht. Hierfür wird die Meßsystemplatte 10 oder zumindest der Boden 3 der Titerplatte 1 aus transparentem Material, wie beispielsweise Kunststoff, Glas oder Quarzglas gefertigt. Da unterhalb eines Meßkanals 13 lediglich der Boden 3 der Titerplatte 1 mit einer geringen Bodenstärke im vorzugsweise Submillimeterbereich verbleibt, wird hierdurch auch sichergestellt, daß der optische Strahlengang nicht beeinträchtigt wird.

In einer anderen hier nicht dargestellten Ausführungsform stehen die Meßkanäle 13 in direkter Verbindung mit dem Vakuumkanal 11 und können dadurch als Vakuumverzweigungskanäle zum Anziehen der Titerplatte 1 auf die ebene Auflagefläche 8 verwendet werden.

Die Figur 5 zeigt eine weitere Ausführungsform der erfindungsgemäßen Planarisierungseinrichtung 21" für eine Aufnahmeeinrichtung am Beispiel einer schematisch dargestellten Dosierstation 20a. Die Titerplatten 1 liegen vor der Planarisierung auf einer der Planarisierungseinrichtung 21" zugehörigen ebenen Auflageplatte 14" mit ebener Auflageseite 23" auf, die bei diesem Ausführungsbeispiel die ebene Auflagefläche 8 bildet. Im Unterschied zu den Auflageplatten 14, 14' in den Figuren 3 und 4 weist diese Auflageplatte 14" keine integrierte Unterdruckeinrichtung 28, 28' auf. Zum Andrücken und/oder Anziehen der Titerplatte 1 auf die ebene Auflagefläche 8 weist die Planarisierungseinrichtung 21" eine von oben in Pfeilrichtung 17 mit vorzugsweise mechanischer Kraft beaufschlagte Andruckplatte 15 auf. Diese Kraft wird beispielsweise hydraulisch, pneumatisch oder elektromotorisch erzeugt und wird während der Durchführung der Grundoperationen in der Dosierstation 20a aufrecht erhalten oder zumindest solange bis die Durchbiegung 6 und die Variation 7 der Reaktionsgefäße 2 der Titerplatte 1 gemäß Figur 5 beseitigt ist. Die Andruckplatte 15 weist bei dem hier dargestellten Ausführungsbeispiel eine der Titerplatte 1 angepaßte Größe auf, um ein flächenhaftes Andrücken der Titerplatte 1 auf die ebene Auflagefläche 8 zu bewirken. Um hierbei eine Beschädigung der Reaktionsgefäße 2 der Titerplatte zu vermeiden, wird die Titerplatte 1 falls erforderlich vor dem Anpressen mit einer ebenen Deckplatte abgedeckt.

Erfindungsgemäß kann die Andruckplatte 15 beaufschlagende Kraft auch magnetisch, insbesondere elektromagnetisch, erzeugt werden. Um hierbei einen elektromagnetischen Kraftschluß zwischen der Andruckplatte 15 und der ebenen Auflageplatte 14" zu ermöglichen, werden die erforderlichen Magnete und/oder Elektromagnete in der Andruckplatte 15 und/oder in der ebenen Auflageplatte 14'' angeordnet.

Nach einem besonderen Gedanken der Erfindung wird die jeweilige Ausführungsform der Andruckplatte 15 den Anforderungen der jeweiligen Arbeitsstation der Screening- und/oder Synthese-Vorrichtung und damit der jeweils durchzuführenden Grundoperation angepaßt. Gemäß Figur 5 ist die Andruckplatte 15 für eine Dosierstation 20a in Art einer Lochplatte mit mehreren als Bohrung 16 ausgebildeten Ausnehmungen 30 ausgeführt. Hierbei sind die Ausnehmungen 30 im gleichem Rastermaß wie die Reaktionsgefäße 2 auf der Titerplatte 1 angeordnet, um von oben einen freien Zugang zu den Reaktionsgefäßen 2 der Titerplatte 1 und damit die Flüssigkeitsabgabe oder -aufnahme zu ermöglichen.

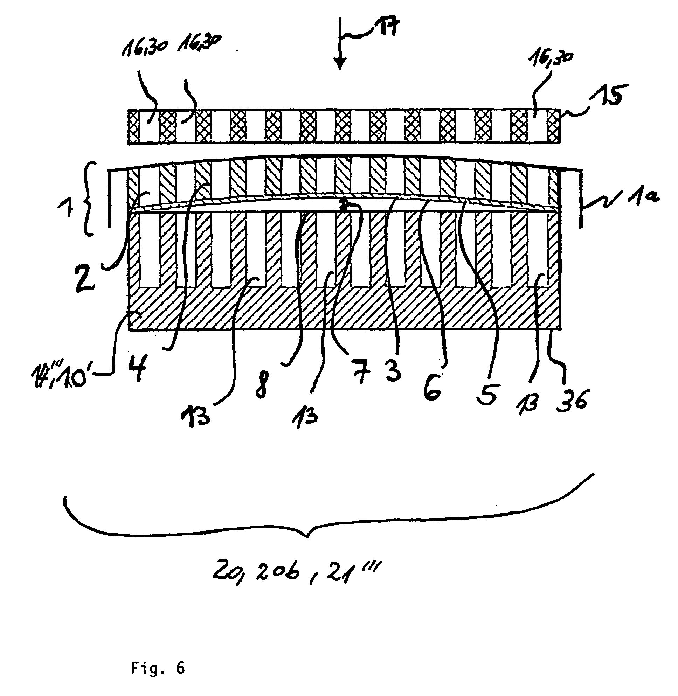

Die Figur 6 zeigt eine weitere Ausführungsform der erfindungsgemäßen Planarisierungseinrichtung 21''' mit einer Andruckplatte 15 zum Planarisieren von Titerplatten 1 für eine Meßstation 20b. Es zeigt sich, daß diese Andruckplatte 15 identisch zur Ausführungsform der Andruckplatte 15 in Figur 5 mit in gleichem Rastermaß wie die Reaktionsgefäße 2 der Titerplatte 1 in Form von Bohrungen 16 angeordneten Ausnehmungen 30 ausgebildet ist. Bei diesem Ausführungsbeispiel ermöglichen die Ausnehmungen 30 eine Detektion, wie beispielsweise eine optische Transmissionsmessung, von oben und unten durch die bereits in die Reaktionsgefäße 2 eingefüllten flüssigen Proben hindurch. Für diese optischen Messungen ist die der Planarisierungseinrichtung 21''' zugehörige Auflageplatte 14''' in Form einer ebenen Meßsystemplatte 10' ohne Unterdruckeinrichtung 28', aber mit bereits oben beschriebenen optischen Meßkanälen 13 ausgebildet. Die bei der optischen Messung zum Einsatz kommenden optischen Elemente, wie beispielsweise CCD-Detektionselemente, können entweder außerhalb der Titerplatte 1 und bevorzugt direkt unterhalb des Bodens 36 der Meßsystemplatte 10' den Meßkanälen 13 gegenüberliegend oder aber auch innerhalb der Titerplatte 1 in den Meßkanälen 13 angeordnet werden. Hierfür besteht die Meßsystemplatte 10' oder zumindest der Boden 36 der Meßsystemplatte 10' aus transparentem Material, wie beispielsweise aus Kunststoff, Glas oder Quarzglas. Für die Durchführung der optischen Messung wird zunächst die Titerplatte 1 gemäß Figur 6 auf die ebene Auflageseite 23''' der Meßsystemplatte 10' aufgelegt, wobei diese die ebene Auflagefläche 8 bildet. Danach wird, wie bereits beschrieben, die Auflageplatte 15 von oben in Pfeilrichtung 17 mit hydraulisch, pneumatisch, elektromotorisch oder magnetisch erzeugter Kraft beaufschlagt. Hierdurch wird die herstellungsbedingte Durchbiegung 6 und die Variation 7 in der Lage der Reaktionsgefäße 2 der Titerplatte 1, wie in Figur 6 gezeigt, beseitigt und eine ebene Titerplatte gemäß Figur 1 erzeugt. Hierdurch ist die relative Lage der Reaktionsgefäße 2 in der Titerplatte 1 zueinander exakt definiert und damit die Reproduzierbarkeit der Meßergebnisse sichergestellt. Schließlich wird die optische Transmissionsmessung mit dieser ebenen Titerplatte 1 durchgeführt.

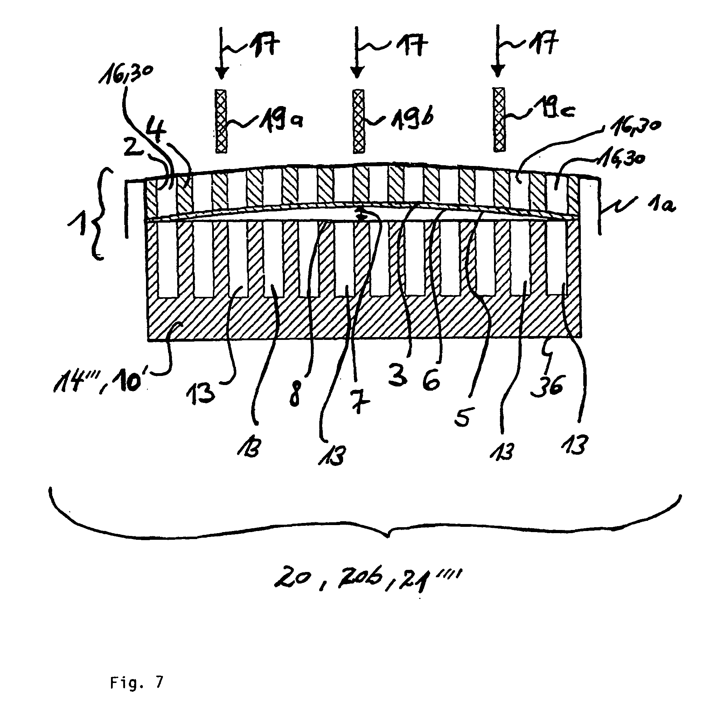

Ein anderer besonderer Gedanke der Erfindung besteht darin, neben der Planarisierung der Titerplatte 1 durch flächenhaftes Anziehen und/oder Andrücken auch ein punktweises Anziehen und/oder Andrücken der Titerplatte 1 auf die ebene Auflagefläche 8 zu realisieren. Hierzu zeigt die Figur 7 eine weitere bevorzugte Ausführungsform der erfindungsgemäßen Planarisierungseinrichtung 21"" mit Andruckstiften 19a-c zur Planarisierung von Titerplatten 1 für eine Meßstation 20b. Hierbei werden einzelne oder vorzugsweise auf einer nicht dargestellten Andruckplatte 15 angeordnete Andruckstifte 19a-c zum Andrücken der Titerplatte 1 auf die ebene Auflagefläche 8 von oben in Pfeilrichtung 17 mit hydraulisch, pneumatisch oder elektromotorisch erzeugter Kraft beaufschlagt. Die Andruckstifte 19a-c sind derart beabstandet parallel zueinander angeordnet, daß sie beim Beaufschlagen der Kraft auf die Titerplatte 1 auf die Wandbereiche 4 zwischen zwei Reaktionsgefäßen 2 der Titerplatte 1 aufdrücken. Durch diese Ausführungsform wird die Titerplatte 1 lediglich lokal an diesen Wandbereichen 4 auf die ebene Auflagefläche 8 angedrückt und damit in Teilbereichen planarisiert. Da die Andruckstifte 19a-c aber vorzugsweise verteilt über die Grundfläche 5 der Titerplatte 1 angeordnet sind, wird auch mit dieser Ausführungsform eine Planarisierung bzw. zumindest eine Verringerung oder ein Ausgleich der herstellungsbedingten Durchbiegung 6 und der Variation 7 der Lage der Reaktionsgefäße 2 über die gesamte Grundfläche 5 der Titerplatte 1 erreicht.

Ebenfalls denkbar ist, daß zum punktweisen Anziehen und/oder Andrücken der Titerplatte 1 auf die ebene Auflagefläche 8 in den in Figuren 5 und 6 gezeigten Andruckplatten 15 sowie Auflageplatten 14", 14''' lediglich in lokalen Bereichen der Auflageseite 23", 23''' Magnete angeordnet werden. Auch denkbar ist, daß hierzu die in Figuren 3 und 4 dargestellten Auflageplatten 14, 14' mit Unterdruckeinrichtung 28, 28' lediglich mit in lokalen Bereichen der Auflageseite 23, 23' angeordneten Ansaugnuten 22a-c ausgebildet werden.

Generell können durch die Erfindung Titerplatten 1 mit herstellungsbedingten Durchbiegungen 6 planarisiert werden. Damit können ohne Nachteile für die Funktionalität, Effektivität und Zuverlässigkeit in Screening- und/oder Synthese-Vorrichtungen spritzgußtechnisch hergestellte Titerplatten 1 eingesetzt werden. Hierdurch können auch die Herstellungsanforderungen an die Titerplatten 1, und insbesondere an die Titerplatten 1 mit einer sehr hohen Zahl von Reaktionsgefäßen, wie beispielsweise 1536-Reaktionsgefäße, bezüglich der Ebenheit und der Durchbiegung deutlich reduziert werden.

### Bezugszeichen:

- 1: Titerplatte
- 1a: Titerplattenrahmen
- 2: Reaktionsgefäß
- 3: Boden
- 4: Wandbereich
- 5: Grundfläche
- 6: Durchbiegung
- 7: Variation
- 8: ebene Auflagefläche
- 9: Vakuumplatte
- 10, 10': Meßsystemplatte
- 11: Vakuumkanal
- 11a-c: Vakuumverzweigungskanäle
- 11a'-k': Vakuumverzweigungskanäle
- 12: Vakuumstutzen
- 13: optischer Meßkanal
- 14-14''': ebene Auflageplatte
- 15: Andruckplatte
- 16: Bohrung
- 17: Kraftrichtung
- 19a-c: Andruckstift
- 20: Aufnahmeeinrichtung
- 20a: Dosierstation
- 20b: Meßstation
- 21-21'''': Planarisierungseinrichtung
- 22a-c: Ansaugstutzen
- 22a'-k': Ansaugstutzen
- 23-23''': Auflageseite
- 24: Oberseite
- 25a-e: Schichten
- 26: Durchbrüche
- 27: Ansaugöffnungen
- 28, 28': Unterdruckeinrichtung
- 30: Ausnehmungen
- 36: Boden
- 37: Sensoreinheit

## Patentansprüche

1. Screening- und/oder Synthese-Vorrichtung zum Durchführung mindestens einer Grundoperation, wie Zugeben, Abgeben, Überführen, Umsetzen, Detektieren, an in Reaktionsgefäßen (2) eines Substanzträgers (1), insbesondere einer Titerplatte, enthaltenen Proben mit mindestens einer Aufnahmeeinrichtung (20) zur Aufnahme des Substanzträgers (1),
**dadurch gekennzeichnet, daß**
die Aufnahmeeinrichtung (20) eine Planarisierungseinrichtung (21, 21', 21'', 21''', 21'''') aufweist, die den Substanzträger (1) vor und/oder während dem Durchführen der Grundoperation durch Beaufschlagen mit einer Andrück- und/oder Anziehkraft auf eine ebene Auflagefläche (8) zumindest teilweise planarisiert.

2. Vorrichtung nach Anspruch 1, **dadurch gekennzeichnet, daß** die Planarisierungseinrichtung (21, 21') zum Andrücken und/oder Anziehen des Substanzträgers (1) auf die Auflagefläche (8) eine Unterdruckeinrichtung (28, 28') aufweist.

3. Vorrichtung nach Anspruch 2, **dadurch gekennzeichnet, daß** die Unterdruckeinrichtung (28, 28') mindestens einen mit der Auflagefläche (8) in Verbindung stehenden Vakuumkanal (11) aufweist, der mit einer Unterdruckquelle in Verbindung steht.

4. Vorrichtung nach Anspruch 3, **dadurch gekennzeichnet, daß** der Vakuumkanal (11) in einer ebenen Auflageplatte (14, 14') derart angeordnet ist, daß die Auflageplatte (14, 14') auf der dem Substanzträger (1) zugewandten Auflageseite (23, 23') mehrere Ansaugnuten (22a-c, 22a'-k') aufweist.

5. Vorrichtung nach Anspruch 4, **dadurch gekennzeichnet, daß** die Auflageseite (23, 23', 23'', 23''') der Auflageplatte (14, 14', 14'', 14''') dfe Auflagefläche (8) bildet.

6. Vorrichtung nach Anspruch 4, **dadurch gekennzeichnet, daß** zwischen dem Substanzträger (1) und der Auflageseite (23) der Auflageplatte (14) eine Vakuumplatte (9) angeordnet ist, wobei die Oberseite (24) der Vakuumplatte (9) die Auflagefläche (8) bildet.

7. Vorrichtung nach Anspruch 6, **dadurch gekennzeichnet, daß** die Vakuumplatte (9) zum homogenen Anziehen des Substanzträgers (1) mindestens eine poröse Schicht (25a) aufweist.

8. Vorrichtung nach Anspruch 1, **dadurch gekennzeichnet, daß** die Planarisierungseinrichtung (21", 21''', 21"") zum Andrücken des Substanzträgers (1) auf die Auflagefläche (8) eine mit Kraft beaufschlagbare Andruckplatte (15) aufweist.

9. Vorrichtung nach Anspruch 8, **dadurch gekennzeichnet, daß** die Andruckplatte (15) von oben durch mechanische Kraft beaufschlagbar ist.

10. Vorrichtung nach Anspruch 8, **dadurch gekennzeichnet, daß** die Andruckplatte (15) durch elektromagnetische Kraft beaufschlagbar ist.

11. Vorrichtung nach Anspruch 8, **dadurch gekennzeichnet, daß** die Andruckplatte (15) zum Andrücken des Substanzträgers (1 ) auf die Auflagefläche (8) mehrere Andruckstifte (19a-c) aufweist.

12. Vorrichtung nach Anspruch 11, **dadurch gekennzeichnet, daß** die Andruckstifte (19a-c) derart auf der Andruckplatte (15) verteilt angeordnet sind, daß sie auf Wandbereiche (4) zwischen zwei Reaktionsgefäßen (2) des Substanzträgers (1) aufdrücken.

13. Vorrichtung nach einem der Ansprüche 8 bis 12, **dadurch gekennzeichnet, daß** die Andruckplatte (15) mindestens eine Ausnehmung (30) derart aufweist, daß für die Durchführung mindestens einer der in Anspruch 1 genannten Grundoperationen die Reaktionsgefäße (2) frei zugänglich sind.

14. Vorrichtung nach Anspruch 13, **dadurch gekennzeichnet, daß** die Ausnehmungen (30) als auf der Andruckplatte (15) in gleichem Rastermaß wie die Reaktionsgefäße (2) auf dem Substanzträger (1) angeordnete Bohrungen (16) ausgebildet sind.

15. Vorrichtung nach einem der Ansprüche 4 bis 7, **dadurch gekennzeichnet, daß** die Auflageplatte (14', 14''') und/oder Vakuumplatte (9) zur Aufnahme und/oder zum Anschluß von Detektionselementen eine Vielzahl von Meßkanälen (13) aufweist, die in gleichem Rastermaß wie die Reaktionsgefäße (2) auf dem Substanzträger (1) angeordnet sind.

16. Vorrichtung nach einem der Ansprüche 1 bis 15, **dadurch gekennzeichnet, daß** die Planarisierungseinrichtung (21, 21', 21", 21''', 21'''') mindestens eine Sensoreinheit (37) aufweist.

17. Verfahren in einer Screening- und/oder Synthese-Vorrichtung zur Durchführung mindestens einer Grundoperation, wie Zugeben, Abgeben, Überführen, Umsetzen, Detektieren, an in Reaktionsgefäßen (2) eines Substanzträgers (1), insbesondere einer Titerplatte, enthaltenen Proben,
**dadurch gekennzeichnet, daß**
vor und/oder während dem Durchführen der Grundoperation der Substanzträger (1) durch Beaufschlagen mit einer Andrück- und/oder Anziehkraft zumindest teilweise planarisiert wird.

18. Verfahren nach Anspruch 17, **dadurch gekennzeichnet, daß** der Substanzträger (1) in einer Vorrichtung nach einem der Ansprüche 1 bis 16 planarisiert wird.

19. Verwendung des Verfahrens nach Anspruch 17 oder 18 und der Vorrichtung nach einem der Ansprüche 1 bis 16 in der pharmazeutischen Wirkstoffsuche, in der kombinatorischen Chemie und/oder der biotechnischen Forschung und Entwicklung.

## Claims

1. Screening and/or synthesis device for carrying out at least one basic operation, such as adding, releasing, converting, reacting, detecting, on samples contained in reaction vessels (2) of a substance carrier (1), in particular a titre plate, with at least one holding appliance (20) for holding the substance carrier (1),
**characterised in that**
the holding appliance (20) comprises a levelling appliance (21, 21', 21", 21"', 21"") which levels the substance carrier (1), at least in part, onto a plane support face (8) before and/or while carrying out the basic operation by applying a pressing and/or drawing force.

2. Device according to Claim 1, **characterised in that** the levelling appliance (21, 21') comprises an underpressure appliance (28, 28') for pressing and/or drawing the substance carrier (1) onto the support face (8).

3. Device according to Claim 2, **characterised in that** the underpressure appliance (28, 28') comprises at least one vacuum channel (11) which communicates with the support face (8) and with an underpressure source.

4. Device according to Claim 3, **characterised in that** the vacuum channel (11) is disposed in a plane support plate (14, 14') such that the support plate (14, 14') comprises a plurality of suction grooves (22a-c, 22'-k') on the support side (23, 23') which faces the substance carrier (1).

5. Device according to Claim 4, **characterised in that** the support side (23, 23', 23", 23"') of the support plate (14, 14', 14", 14"') forms the support face (8).

6. Device according to Claim 4, **characterised in that** a vacuum plate (9) is disposed between the substance carrier (1) and the support side (23) of the support plate (14), wherein the top side (24) of the vacuum plate (9) forms the support face (8).

7. Device according to Claim 6, **characterised in that** the vacuum plate (9) comprises at least one porous layer (25a) for homogeneously drawing the substance carrier (1).

8. Device according to Claim 1, **characterised in that** the levelling appliance (21", 21"', 21"") comprises a pressing plate (15), to which force can be applied, for pressing the substance carrier (1) onto the support face (8).

9. Device according to Claim 8, **characterised in that** mechanical force can be applied to the pressing plate (15) from above.

10. Device according to Claim 8, **characterised in that** electromagnetic force can be applied to the pressing plate (15).

11. Device according to Claim 8, **characterised in that** the pressing plate (15) comprises a plurality of pressing pins (19a-c) for pressing the substance carrier (1) onto the support face (8).

12. Device according to Claim 11, **characterised in that** the pressing pins (19a-c) are disposed in distributed fashion on the pressing plate (15) such that they press onto wall regions (4) between two reaction vessels (2) of the substance carrier (1).

13. Device according to any one of Claims 8 to 12, **characterised in that** the pressing plate (15) comprises at least one recess (30) such that the reaction vessels (2) are freely accessible for carrying out at least one of the basic operations mentioned in Claim 1.

14. Device according to Claim 13, **characterised in that** the recesses (30) are formed as bores (16) which are disposed at the pressing plate (15) at the same pitch as the reaction vessels (2) at the substance carrier (1).

15. Device according to any one of Claim 4 to 7, **characterised in that** the support plate (14', 14"') and/or vacuum plate (9), for holding and/or connecting detection elements, comprises a plurality of measuring channels (13) which are disposed at the same pitch as the reaction vessels (2) at the substance carrier (1).

16. Device according to any one of Claim 1 to 15, **characterised in that** the levelling appliance (21, 21', 21", 21"', 21"") comprises at least one sensor unit (37).

17. Method in a screening and/or synthesis device for carrying out at least one basic operation, such as adding, releasing, converting, reacting, detecting, on samples contained in reaction vessels (2) of a substance carrier (1), in particular a titre plate,
**characterised in that**
the substance carrier (1) is levelled, at least in part, before and/or while carrying out the basic operation by applying a pressing and/or drawing force.

18. Method according to Claim 17, **characterised in that** the substance carrier (1) is levelled in a device according to any one of Claims 1 to 16.

19. Use of the method according to Claim 17 or 18 and the device according to any one of Claims 1 to 16 in pharmaceutical active substance research, in combinatorial chemistry and/or biotechnological research and development.

## Revendications

1. Dispositif de criblage et/ou de synthèse destiné à réaliser au moins une opération de base, comme l'ajout, la distribution, le transport, la transformation, la détection d'échantillons contenus dans des récipients de réaction (2) d'un support de substance, en particulier d'une plaque titrée, comprenant au moins un système de réception (20) destiné à recevoir le support de substance (1),
**caractérisé en ce que**
le système de réception (20) comprend un dispositif d'aplanissement (21, 21', 21'', 21''', 21''''), qui aplanit au moins en partie le support de substance (1) avant et/ou pendant la réalisation de l'opération de base du fait d'une sollicitation par une force de compression et/ou de serrage sur une surface d'appui (8) unie.

2. Dispositif selon la revendication 1, **caractérisé en ce que** le système d'aplanissement (21, 21') destiné à comprimer et/ou à serrer le support de substance (1) sur la surface d'appui (8) comprend un système à dépression (28, 28').

3. Dispositif selon la revendication 2, **caractérisé en ce que** le système à dépression (28, 28') comprend au moins une colonne à vide (11) reliée à la surface d'appui (8), laquelle colonne est reliée à une source de dépression.

4. Dispositif selon la revendication 3, **caractérisé en ce que** la colonne à vide (11) est disposée dans une plaque d'appui (14, 14') unie, de telle sorte que la plaque d'appui (14, 14') comprend sur le côté d'appui (23, 23') tourné vers le support de substance (1) plusieurs rainures d'aspiration (22a-c, 22a'-k').

5. Dispositif selon la revendication 4, **caractérisé en ce que** le côté d'appui (23, 23', 23'', 23''') de la plaque d'appui (14, 14', 14'', 14''') forme la surface d'appui (8).

6. Dispositif selon la revendication 4, **caractérisé en ce qu'**une plaque de vide (9) est disposée entre le support de substance (1) et le côté d'appui (23) de la plaque d'appui (14), le côté supérieur (24) de la plaque de vide (9) formant la surface d'appui (8).

7. Dispositif selon la revendication 6, **caractérisé en ce que** la plaque de vide (9) destinée au serrage homogène du support de substance (1) comprend au moins une couche poreuse (25a).

8. Dispositif selon la revendication 1, **caractérisé en ce que** le système d'aplanissement (21'', 21''', 21'''') destiné à comprimer le support de substance (1) sur la plaque d'appui (8) comprend une plaque de pression (15) pouvant être sollicitée par une force.

9. Dispositif selon la revendication 8, **caractérisé en ce que** la plaque de pression (15) peut être sollicitée du dessus par une force mécanique.

10. Dispositif selon la revendication 8, **caractérisé en ce que** la plaque de pression (15) peut être sollicitée par une force électromagnétique.

11. Dispositif selon la revendication 8, **caractérisé en ce que** la plaque de pression (15) destinée à presser le support de substance (1) sur la surface d'appui (8) comprend plusieurs broches de pression (19a-c).

12. Dispositif selon la revendication 11, **caractérisé en ce que** les broches de pression (19a-c) sont disposées en étant réparties sur la plaque de pression (15) de telle sorte qu'elles effectuent une pression sur les zones de paroi (4) entre deux récipients de réaction (2) du support de substance (1).

13. Dispositif selon l'une des revendications 8 à 12, **caractérisé en ce que** la plaque de pression (15) comprend au moins un évidement (30), de telle sorte que les récipients de réaction (2) sont librement accessibles pour la réalisation d'au moins une des opérations de base citées dans la revendication 1.

14. Dispositif selon la revendication 13,
**caractérisé en ce que** les évidements (30) sont conçus comme des alésages (16) disposés sur la plaque de pression (15) dans la même dimension modulaire que les récipients de réaction (2) sur le support de substance (1).

15. Dispositif selon l'une des revendications 4 à 7, **caractérisé en ce que** la plaque d'appui (14', 14''') et/ou la plaque de vide (9) comprend, en vue de la réception et/ou du raccordement d'éléments de détection, une pluralité de canaux jaugeurs (13) qui sont disposés dans la même dimension modulaire que les récipients de réaction (2) sur le support de substance (1).

16. Dispositif selon l'une des revendications 1 à 15, **caractérisé en ce que** le système d'aplanissement (21, 21', 21'', 21''', 21'''') comprend au moins un boîtier de détection (37).

17. Procédé dans un dispositif de criblage et/ou de synthèse destiné à réaliser au moins une opération de base, comme l'ajout, la distribution, le transport, la transformation, la détection d'échantillons contenus dans des récipients de réaction (2) d'un support de substance (1), en particulier d'une plaque titrée,
**caractérisé en ce que**
le support de substance (1) est aplani au moins en partie, avant et/ou pendant la réalisation de l'opération de base, du fait d'une sollicitation par une force de pression et/ou de serrage.

18. Procédé selon la revendication 17, **caractérisé en ce que** le support de substance (1) est aplani dans un dispositif selon l'une des revendications 1 à 16.

19. Utilisation du procédé selon la revendication 17 ou 18 et du dispositif selon l'une des revendications 1 à 16 dans les essais pharmaceutiques sur la matière active, dans la chimie combinatoire et/ou dans la recherche et le développement biotechniques.
